(19) Europäisches Patentamt / European Patent Office / Office européen des brevets

(11) **EP 2 221 554 A1**

(12) **EUROPEAN PATENT APPLICATION**
published in accordance with Art. 153(4) EPC

(43) Date of publication:
**25.08.2010 Bulletin 2010/34**

(51) Int Cl.:
*F24J 2/06* (2006.01)  *F24J 2/46* (2006.01)

(21) Application number: **08850891.6**

(22) Date of filing: **06.11.2008**

(86) International application number:
**PCT/RU2008/000686**

(87) International publication number:
**WO 2009/064218 (22.05.2009 Gazette 2009/21)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.11.2007 RU 2007141458**

(71) Applicant: **Karnaukhov, Aleksei Valeryevich Moscow 117049 (RU)**

(72) Inventor: **Karnaukhov, Aleksei Valeryevich Moscow 117049 (RU)**

(74) Representative: **Jeck, Anton**
**Jeck - Fleck - Herrmann**
**Patentanwälte**
**Klingengasse 2/1**
**71665 Vaihingen/Enz (DE)**

(54) **SOLAR ENERGY CONCENTRATOR**

(57) The invention relates to solar technology and may be used in devices converting the energy of solar radiation into useful energy of various kinds (thermal, electrical, chemical, etc. kinds of energy). The solar concentrator comprises at least one reflector with a reflective element made of a band of flexible material, stiffening ribs not connected to each other, which have a concave arcuate shape surface, and stops connected to the stiffening ribs by means of elastic mounting elements, where the working surface of the reflector is formed owing to flexible properties of the material of the band and the mounting elements creating forces exerted on the edge of the band, which are symmetrical relative to the longitudinal plane of symmetry of the stiffening rib. The claimed invention enables to raise the rigidity of the structure without application of additional elements intended for rigid fastening of the ribs. At the same time, the required precision of the reflective surface is achieved. 1 independent claim, 5 dependent claims, 13 figs.

Fig. 1

EP 2 221 554 A1

**Description**

The invention relates to solar technology and may be used in devices converting the energy of solar radiation into useful energy of various kinds (thermal, electrical, chemical, etc. kinds of energy).

From the state of the art, there are known solar concentrators of the cylindrical type, which contain no shape elements and comprise one or more flexible reflective rectangular plates, which are rendered the relevant shape (US 4115177, US 4596238, US 4469938, US 4103672).

The disadvantage of known solutions containing no shape elements is insufficient accuracy and stability of the reflective surface. Such reflectors are characterized by a high ratio of thickness of reflective plate to linear dimensions of the reflector, which results in higher material intensity of the product. Practical application of such reflectors is limited to articles of relatively small linear dimensions.

In most of the cases, the objective is to ensure stabilization and precision of the shape of the reflective surface. To this effect, the reflector design is supplemented with special shape elements, namely, stiffening ribs, which set and stabilize the shape of the reflective surface. Here, the stiffeners are generally rigidly interconnected and/or fixed on a frame. The reflective element is fastened to the shape element by means of special mounting elements (JP11287521A, US4571812).

There is a known solar concentrator, which comprises a reflective element made of a band of flexible material with a regular parabolic surface and a supporting frame, which consists of a number of approximately parabolic ribs rigidly interconnected by means of a metal tube. Here, the reflective element is fastened to the shape surface of the stiffening ribs by means of pasting (US 4268332, MPK B32B 31/04, G02B 5/10, published on May 19, 1981).

The known designs of reflectors comprising shape elements are generally rather complicated, manual labor intensive and material intensive. Besides, structures using rigid mounting of a flexible reflective plate to the stiffening ribs are not resistant enough to temperature drops. If different parts of the structure are at different temperatures or made of materials with different thermal expansion coefficients, the shape of the reflective surface becomes deformed.

The objective of the invention is raising the structural rigidity without application of special elements intended for rigid fixation of stiffening ribs relative to each other combined with the required precision of the reflective surface.

The objective is achieved owing to the fact that the solar concentrator comprises at least one reflector with a reflective element made of a band of flexible material, stiffening ribs not connected to each other, which have a concave arcuate shape surface, and stops connected to the stiffening ribs by means of elastic mounting elements, where the working surface of the reflector is formed owing to flexible properties of the material of the band and the mounting elements creating forces exerted on the edge of the band symmetrical relative to the longitudinal plane of symmetry of the stiffening rib.

Here, each of the stops can interact with the reflective element along two pressure areas. The stops may have a slit for each of the stiffening ribs, whereas the elastic mounting elements are located on different sides of the stiffening rib. The stops and the elastic mounting elements may be implemented in the form of a single elastic structure rounding the rib. In the both cases, the stop produces pressure on the reflector symmetrical to the longitudinal plane of symmetry of the stiffening rib. The stop may be implemented along the entire length of the reflective element and connected to each stiffening rib. The stops may be made double-sided, where it is possible to mount two reflective elements of adjacent reflectors.

Owing to design features of the concentrator, the claimed invention enables to raise the structural rigidity while retaining the required precision of the reflective surface.

The essence of the invention is clarified with the following pictures.

Fig.1 presents the general view of the reflector;
Fig. 2 is the reflector stop implemented with two areas of pressure on the reflective element;
Fig. 3 is detail section A from Fig. 2;
Fig. 4 presents distribution of pressure on the edge of the reflective element relative to the stiffening rib;
Fig. 5 presents angle $\alpha$ between the direction of the resulting force acting from the side of the stop on the reflector and tangential to the shape surface of the stiffening rib;
Fig. 6 is a reflector stop implemented in the form of a single elastic structure;
Fig. 7 is a reflector with a stop implemented along the entire length of the reflective element;
Fig. 8 is a reflector with a stop implemented along the entire length of the reflective element (view from below);
Fig. 9 is the general view of the reflector with a stop shared by a number of stiffening ribs, where the elastic elements are made individual for each stiffening rib;
Fig. 10 is the general view of the concentrator constituting a group of reflectors;
Fig. 11 is a general view of the concentrator constituting a group of reflectors (view from below);
Fig. 12 is a doubled stop for reflectors united in a group;
Fig. 13 is a double-sided stop for reflectors united in a group.

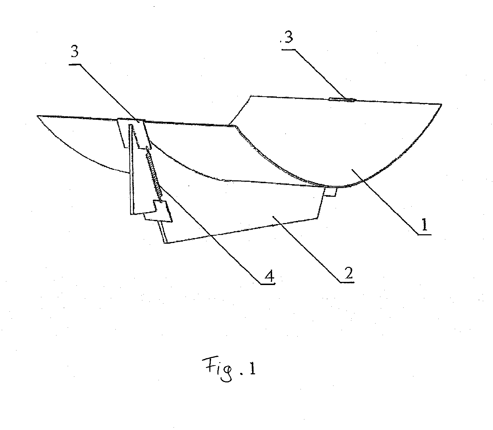

The solar concentrator comprises a reflector with reflective element 1 made of a band of flexible material with parallel edges and stiffening ribs 2 with concave arcuate shape surface. Each of stiffening ribs 2 is fastened to reflective element 1 by means of stops 3 and elastic mounting elements 4, which, in one of the embodiments, may be implemented in the form of springs (Fig. 1). To form the working surface of the reflective element, the material it is made of must possess of the following characteristics:

- deformability (possibility of bending);
- elasticity;
- rigidity.

This set of properties is possessed, e.g., by alloys of iron and aluminum, as well as rigid plastics (PVC, polycarbonate, etc.). The combination of rigidity and deformability predetermines a specific geometric property of the reflective element: it has its linear dimensions exceeding its thickness considerably. Besides, as a result of the aforesaid combination of the material property, the linear dimensions of the area of contact between the stops and the sheet of the reflective element exceed the thickness of the sheet considerably.

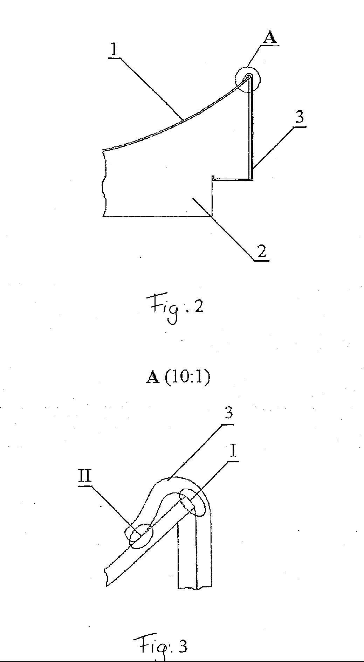

Fig. 2, 3 present the preferred embodiment of stop 3, where it interacts with the reflective element in two pressure areas. The first pressure area (I) corresponds to pressure exerted directly on the edge of reflective element 1, while the second pressure area (II) corresponds to the plane of reflective element 1 close to its edge, above the corresponding stiffening rib.

Such implementation of the stop prevents deformation of the edge of the band of the reflective element even if its width does not exactly match the length of the shape edge of the stiffening rib. Here, the second pressure area ensures stabilization of position of the edge of the reflective element band relative to the stiffening rib.

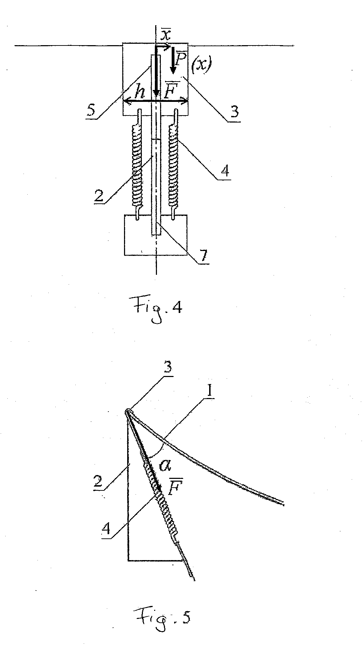

Each of stops 3 acts on the edge of the band of reflective element 1 with forces symmetrical relative to longitudinal plane of symmetry 7 of stiffening rib 2 (Fig. 4). The symmetry of the force relative to stiffening rib 2 means that the pressure exerted by stop 3 on the edges of the band of reflective element 1 is subject to the following condition:

$$\left| \int_{-\frac{1}{2}h}^{\frac{1}{2}h} \left[ \overline{x} \cdot \overline{P}(x) \right] dx \right| \leq 0.1 \int_{-\frac{1}{2}h}^{\frac{1}{2}h} \left| \left[ \overline{x} \cdot \overline{P}(x) \right] \right| dx \; ,$$

where $h$ is the width of the stop;
x is the coordinate of shift along the edge of the band of the reflective element relative to the point of its crossing longitudinal plane of symmetry 7 of the corresponding stiffening rib;
$P(x)$ is pressure acting from the side of the stop on the band of the reflective element.

The symmetry of the force produced on the edge of the band of the reflective element is a necessary but not sufficient condition for creating a positive effect of stress distribution, namely, higher rigidity of the reflector structure, in the reflector. It is also for angle $\alpha$ (Fig.5) between the direction of resulting force $\overline{F}$ acting from the side of the stop on the band of the reflective element and tangential to the shape surface of the stiffening rib, perpendicular to the edge of the reflective element in the crossing point of the reflector edge and the plane of the stiffening rib, to meet the following condition:

$$\alpha \leq arcctg(k) \; ,$$

where k is the coefficient of friction of a pair of materials, of which the stiffening ribs and the reflective element are made.

Resulting force $\overline{F}$ acting from the side of the stop on the band of the reflective element is found from the following equation

$$\overline{F} = \int_{-\frac{1}{2}h}^{\frac{1}{2}h} \overline{P}(x) dx$$

and is directed along the line connecting the point of fastening the stop to the stiffening rib and the point of contact between the reflective element and the stop. Therefore, choosing a point for fastening the stop to the stiffening rib does not only require meeting the design specifications, but also meeting the aforesaid condition.

This condition at selection of the angle ensures self-alignment of the band of the reflective element along the entire length of the shape surface of the rib, which results in uniform load distribution.

Meeting the aforesaid conditions results in higher rigidity of the reflector combined with retained precision of the reflective surface. This makes it possible to abandon using special structural elements (frame, body, longitudinal tubes, etc.) making the concentrator rigid.

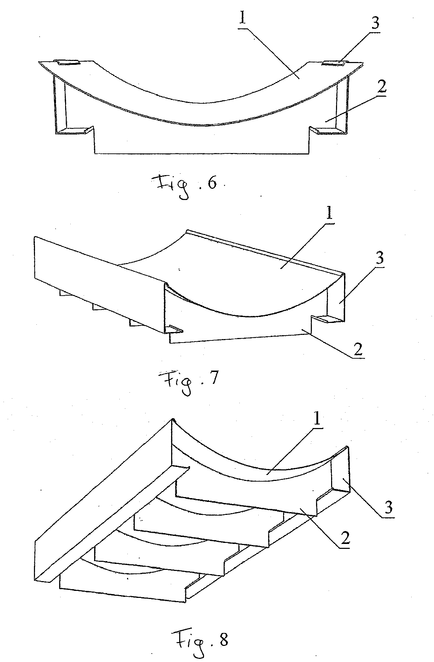

The symmetry of forces exerted on the edge of the reflector is achieved either owing to implementation of stops 3 with slit 5 for the stiffening rib (Fig. 4), or owing to implementation of stops 3 in the form of a single elastic structure, which rounds the corresponding stiffening rib (Fig. 6).

In the first embodiment (Fig. 4), stops 3 with slit 5 are connected to the stiffening ribs through two elastic mounting elements 4 located symmetrically relative to the plane of symmetry of the stiffening rib. Here, the symmetry of force on the edge of the band of the reflective element is ensured by the symmetry of the stops and the equivalence of mechanical properties of elastic mounting elements 4. Among others, springs may be used as elastic mounting elements.

In the second embodiment (Fig. 6), stop 3 may be implemented in the form of a bent metal plate, a one-piece-cast plastic part, or a piece of rolled metal or plastic.

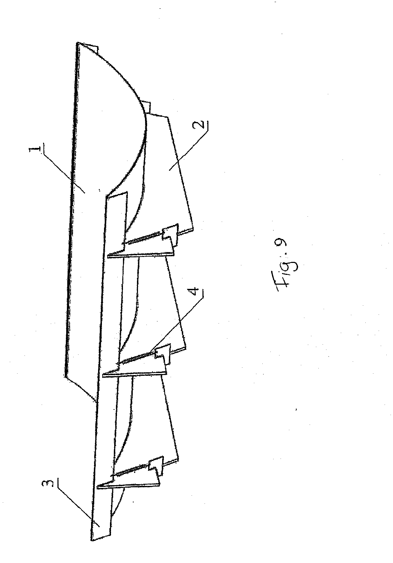

Stop 3, for both of the embodiments, may be implemented both individual for each of the stiffening ribs, and shared by a number of ribs (Fig. 7, 8, 9).

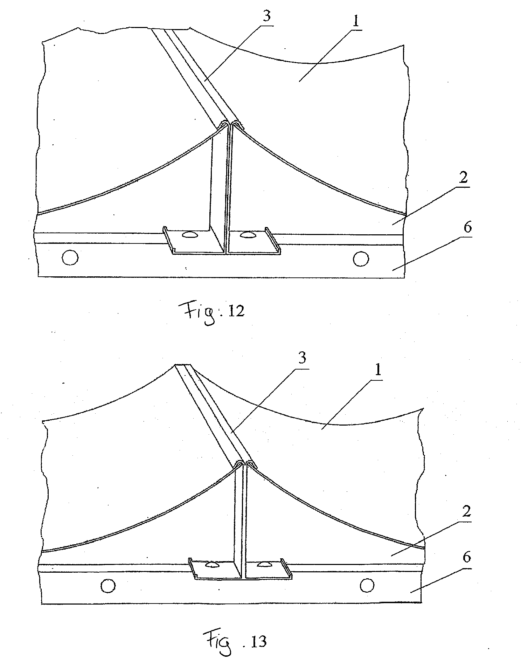

In addition, the stop may be made double-sided, with a possibility of fastening two reflective elements of adjacent reflectors (Fig. 13).

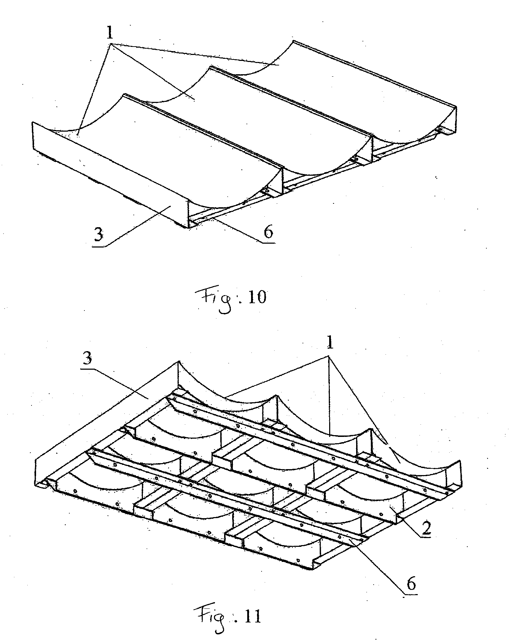

The preferred embodiment of this invention provides for a concentrator, which constitutes a group of interconnected reflectors (Fig. 10, 11). In this case, it is possible to use both single-sided (Fig. 12) and double-sided (Fig. 13) stops for fastening of two adjacent reflective elements. Various profiles 6, which are mounted directly to stiffening ribs 2, may be used for unification of a group of reflectors (Fig. 10, 11).

Fastening of stiffening ribs to the reflective element described herein provides the symmetry of forces acting on the band of the reflective element. This creates stress distribution in the reflective element exercised in such a way that the rigidity of the structure is considerably increased, while the required precision of the reflective surface is retained, and it becomes possible to abandon using additional elements intended for ensuring mutual immobility of the stiffening ribs related to the same reflector. Besides, the following positive results are achieved: reduced cost and simplified design of the solar concentrator combined with the retained required precision and stability of shape of the reflective surface; reduced time required for assembling of the concentrator; reduced share of manual labor and possibility of complete automation of the process of producing the reflectors; ensuring maintainability of the product; reduced material intensity of the structure; ensuring stability of the shape of the concentrator at high thermal loads and temperature drops.

While the invention was described with an embodiment illustrated in the figures, it will be apparent for those skilled in the art that modifications may be introduced in the form and details of the invention implementation, as well as equivalent replacements of elements, as long as these are within the concept and scope of the invention. Accordingly, claims, which allow for broad interpretation, where no details of a specific embodiment disclosed herein as the preferred embodiment of the invention are specified, should not be construed as limited to the above details.

**Claims**

1. A solar concentrator comprising at least one reflector with a reflective element made of a band of flexible material **characterized in that** it contains stiffening ribs not connected to each other, which have a concave arcuate shape surface, and stops connected to the stiffening ribs with elastic mounting elements, where the working surface of the reflector is formed owing to flexible properties of the material of the band and the mounting elements creating forces exerted on the edge of the band, which are symmetrical relative to the longitudinal plane of symmetry of the stiffening rib.

2. A concentrator according to claim 1 **characterized in that** each stop interacts with the reflective element along two pressure areas.

3. A concentrator according to claim 1 **characterized in that** the stops have a slit for each stiffening rib, while the elastic mounting elements are located on the both sides of the stiffening rib.

4. A concentrator according to claim 1 **characterized in that** the stops and the elastic mounting elements are implemented in the form of a single elastic structure.

5. A concentrator according to claim 1 and claim 4 **characterized in that**, on each side of the band, the stop is implemented along the entire length of the reflective element and is connected to each stiffening rib.

6. A concentrator according to claim 1 **characterized in that** the stops are made double-sided, with a possibility of mounting two reflective elements of adjacent reflectors.

3

.3

1

4

2

Fig . 1

Fig . 2

A (10:1)

Fig. 3

Fig. 4

Fig. 5

Fig . 6 .

Fig . 7

Fig . 8

Fig. 9

Fig. 10

Fig. 11

Fig. 12

Fig. 13

## INTERNATIONAL SEARCH REPORT

| | International application No. |
|---|---|
| | PCT/RU 2008/000686 |

**A. CLASSIFICATION OF SUBJECT MATTER**

*F24J 2/06  (2006.01)*
*F24J 2/46  (2006.01)*

According to International Patent Classification (IPC) or to both national classification and IPC

**B. FIELDS SEARCHED**

Minimum documentation searched (classification system followed by classification symbols)

F24J 2/00, 2/04, 2/06, 2/10, 2/14, 2/46

Documentation searched other than minimum documentation to the extent that such documents are included in the fields searched

Electronic data base consulted during the international search (name of data base and, where practicable, search terms used)

RUPAT, RUABRU, RUPAT_OLD, RUABU1, Esp@cenet

**C. DOCUMENTS CONSIDERED TO BE RELEVANT**

| Category* | Citation of document, with indication, where appropriate, of the relevant passages | Relevant to claim No. |
|---|---|---|
| A | US 4268332 A (SUN TRAC INDUSTRIES, INC.) 19.05.1981, figures 3, 4, the abstract | 1-6 |
| A | US 4571812 A (INDUSTRIAL SOLAR TECHNOLOGY) 25.02.1986, figure 4, the abstract | 1-6 |
| A | SU 1442960 A1 (TADZHIKSKII POLITEKHNICHESKII INSTITUT) 07.12.1988, figure 2, the claims | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 February 2009 (12.02.2009) | 19 February 2009 (19.02.2009) |

| Name and mailing address of the ISA/ | Authorized officer |
|---|---|
| | |
| Facsimile No. | Telephone No. |

Form PCT/ISA/210 (second sheet) (July 1998)

**EP 2 221 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4115177 A
- US 4596238 A
- US 4469938 A
- US 4103672 A
- JP 11287521 A
- US 4571812 A
- US 4268332 A